# EUROPÄISCHE PATENTANMELDUNG

(11) **EP 1 884 593 A1**
(43) Veröffentlichungstag der Anmeldung: **06.02.2008**
(21) Anmeldenummer: 07108119.4
(22) Anmeldetag: 14.05.2007
(51) Int. Cl.: D21F 3/02

(54) **Presswalze**

(30) Priorität: 05.08.2006 DE 102006036745
(71) Anmelder: Voith Patent GmbH, 89522 Heidenheim (DE)
(72) Erfinder: Autrata, Jochen, 47506 Neukirchen-Vluyn (DE); Hoppermann, Andreas, 41751 Viersen (DE)
(74) Vertreter: Kunze, Klaus

(57) **Zusammenfassung**

Die Erfindung betrifft eine Presswalze zur Behandlung einer Papier-, Karton-, Tissue- oder einer anderen Faserstoffbahn in einer Maschine zur Herstellung und/oder Veredlung derselben mit einem, um einen feststehenden Träger (3) rotierenden, zylindrischen Walzenmantel (2), welcher sich über zumindest ein Stützelement (1) auf dem Träger (3) abstützt, wobei der Spalt zwischen dem Stützelement (1) und dem Walzenmantel (2) mit einem flüssigen Schmiermittel geschmiert wird.

Dabei soll die Temperatur des Schmiermittels dadurch vermindert werden, dass sich in dem Stützelement (1) zumindest ein Wärmeübertrager zur Kühlung wenigstens eines Bereiches des Stützelementes (1) befindet.

## Beschreibung

Die Erfindung betrifft eine Presswalze zur Behandlung einer Papier-, Karton-, Tissue- oder einer anderen Faserstoffbahn in einer Maschine zur Herstellung und/oder Veredlung derselben mit einem, um einen feststehenden Träger rotierenden, zylindrischen Walzenmantel, welcher sich über zumindest ein Stützelement auf dem Träger abstützt, wobei der Spalt zwischen dem Stützelement und dem Walzenmantel mit einem flüssigen Schmiermittel geschmiert wird.

Bei diesen meist als durchbiegungsgesteuerte Presswalzen ausgebildeten Walzen wird der Spalt zwischen Stützelement und Walzenmantel überwiegend hydrostatisch geschmiert.

Durch die Rotationsbewegung des Walzenmantels und der damit verbundenen Flüssigkeitsreibung kommt es zur Aufwärmung des Schmieröls und damit zu einer Verringerung der Viskosität, der Tragfähigkeit und der Lebensdauer des Schmieröls.

Aus diesem Grund wird ein Teil des Schmieröls von der Innenseite des Walzenmantels über einzelne Ölschöpfer abgeführt und Kühlöl von den Seiten der Walze zugeführt.

Unbefriedigend bleiben dabei die relativ großen Temperaturunterschiede des Schmiermittels über die Länge des Walzenmantels betrachtet.

Außerdem erhöht die Zumischung von Kühlöl die Schmierölmenge und damit auch die erforderliche Antriebsleistung.

Während der Rotation wird nämlich das Schmieröl gegen die Stützelemente geschleudert und dabei abgebremst, weshalb eine so genannte Planschleistung aufzubringen ist.

Die Aufgabe der Erfindung ist es daher die Temperatur des Schmiermittels unter weitestgehender Vermeidung der genannten Nachteile zu vermindern.

Erfindungsgemäß wurde die Aufgabe dadurch gelöst, dass sich in dem Stützelement zumindest ein Wärmeübertrager zur Kühlung wenigstens eines Bereiches des Stützelementes befindet.

Das Stützelement steht über den geschmierten Spalt zum Walzenmantel, aber auch außerhalb sehr intensiv mit dem Schmiermittel in Kontakt. Daher ist eine Kühlung des Stützelementes oder zumindest eines Bereiches davon sehr effizient hinsichtlich einer Kühlung des Schmiermittels.

Dies erlaubt auch eine Kühlung axial entlang der gesamten Walze, was zu einer Vergleichmäßigung der Temperatur des Schmiermittels über die Walzenlänge führt.

Bei dem oft auch als Wärmetauscher bezeichneten Wärmeübertrager überträgt ein Medium an ein anderes Medium Wärme, ohne dass die Medien in direkten Kontakt miteinander kommen. Von Wärmeübertragern spricht man vor allem dann, wenn die Medien flüssig oder gasförmig sind.

Für die Übertragung von Wärmeenergie ist immer ein Temperaturgefälle notwendig; je größer das Temperaturgefälle, desto größer die Wärmemenge, die je Zeiteinheit und Fläche übertragen werden kann.

Man unterscheidet dabei Wärmeübertrager nach dem Gleichstromprinzip oder dem Gegenstromprinzip.

Beim Gleichstromprinzip erfolgt der Wärmefluss nur so lange, bis beide Körper die gleiche Temperatur haben.

Durch das Gegenstromprinzip (das kalte Medium fließt dem warmen Medium entgegen), lässt sich auch ein Aufheizen bzw. Abkühlen über das mathematische Mittel erreichen.

Hierzu sollte der Wärmeübertrager zumindest eine Kühlkammer umfassen, die sich im Stützelement befindet und mit einem Kühlmittel gefüllt ist.

Zur Steigerung der Kühlleistung sollte die Kühlkammer möglichst nahe am Schmiermittel, vorzugsweise nahe am Schmierspalt des Stützelementes mit dem Walzenmantel angeordnet werden.

Des Weiteren kann die Kühlleistung noch dadurch verbessert werden, dass die Kühlkammer über thermisch gut leitendes Material mit dem Schmiermittel in Verbindung steht.

Dies ist insbesondere dann umfassend erfüllt, wenn das Stützelement aus einem thermisch gut leitenden Material, insbesondere Metall besteht.

Dabei kann das Kühlmittel gasförmig oder flüssig sein. Mischformen können auch vorteilhaft sein, nämlich dann, wenn die Verdampfungstemperatur des Kühlmittels unter der Betriebstemperatur des Stützelementes liegt.

In Abhängigkeit von der Art des Kühlmittels und der erforderlichen Kühlleistung kann es von Vorteil sein, wenn das Kühlmittel über eine separate Kühlmittel-Zuleitung zur Kühlkammer geführt wird.

Falls das Kühlmittel jedoch von einem Schmier- und/oder Druckmittel des Stützelementes selbst gebildet wird, so ist es zur Minimierung des Aufwandes von Vorteil, wenn die Kühlkammer von einer Schmier- oder Druckmittelleitung des Stützelementes gespeist wird.

Um dabei eine Durchströmung der Kühlkammer zu erreichen, muss dieses Kühlmittel auch wieder abgeführt werden.

Insbesondere dann, wenn das Kühlmittel dem Schmier- oder Druckmittel des Stützelementes nicht gleicht oder das Schmiermittel im Walzeninnern nicht, insbesondere thermisch nicht vom Kühlmittel beeinträchtigt werden soll, ist es zu empfehlen, das Kühlmittel über eine separate Kühlmittel-Ableitung von der Kühlkammer aus der Presswalze abzuführen.

Vor allem, wenn das Kühlmittel dem Schmier- und/oder Druckmittel des Stützelementes gleicht oder das Kühlmittel das Schmiermittel in seiner Wirkung nicht beeinträchtigt, ist es im Interesse eines möglichst geringen, konstruktiven Aufwandes von Vorteil, wenn das Kühlmittel von der Kühlkammer direkt in das Walzeninnere zum Schmiermittel abgeführt wird.

In Fällen, in denen das Kühlmittel dem Schmier- und/oder Druckmittel des Stützelementes nicht gleicht und dessen Schmierfunktion beeinträchtigen könnte, beispielsweise bei der Verwendung von Wasser als Kühlmittel, sollte das Kühlmittel über eine separate Kühlmittel-Zuleitung der Kühlkammer zugeführt und über eine separate Kühlmittel-Ableitung wieder aus der Presswalze abgeführt werden.

Davon unabhängig kann es auch von Vorteil sein, wenn die Kühlkammer mit einem weiteren Zusatz-Wärmeübertrager zur Kühlung des Kühlmittels verbunden ist.

Um dabei den Aufwand zu begrenzen, ist es vorteilhaft, wenn das Kühlmittel des Zusatz-Wärmeübertragers von dem Schmier- und/oder Druckmittel des Stützelementes gebildet wird.

Bei Bedarf kann der Zusatz-Wärmeübertrager aber auch mit eigenem Kühlmittel versorgt werden.

Der Einsatz eines Zusatz-Wärmeübertragers ist insbesondere auch dann von Vorteil, wenn die Verdampfungstemperatur des Kühlmittels über der Raumtemperatur, aber unter der Betriebstemperatur des Stützelementes liegt.

Infolge der Aufnahme von Wärmeenergie kommt es dabei zur Verdunstung des Kühlmittels in der Kühlkammer. Von der Kühlkammer gelangt das gasförmige Kühlmittel dann in den Zusatz-Wärmeübertrager, wo es gekühlt und wieder verflüssigt wird.

Der Zusatz-Wärmeübertrager kann beispielsweise von Kanälen gebildet werden, durch die das Kühlmittel des Wärmeübertragers geführt wird und die von dem Kühlmittel des Zusatz-Wärmeübertragers umströmt werden.

Nachfolgend soll die Erfindung an mehreren Ausführungsbeispielen näher erläutert werden. In der beigefügten Zeichnung zeigt:
- Figur 1:: eine Draufsicht auf ein Stützelement 1;
- Figur 2:: einen Querschnitt durch ein Stützelement 1;
- Figur 3:: einen Querschnitt durch ein anderes Stützelementes 1 und
- Figur 4:: einen Querschnitt durch ein anderes Stützelement 1.

Zur Glättung oder Entwässerung der Faserstoffbahn wird diese meist durch einen oder mehrere Pressspalte geführt, an der eine durchbiegungsgesteuerte Presswalze beteiligt ist.

Diese durchbiegungsgesteuerten Presswalzen besitzen einen zylindrischen Walzenmantel 2, der rotierbar um einen feststehenden Träger 3 gelagert ist.

Dabei stützt sich der Walzenmantel 2 auf einem oder wie hier mehreren, axial nebeneinander angeordneten, hydraulischen Stützelementen 1 ab. Diese Stützelemente 1 drücken den Walzenmantel 2 zur Bildung eines Pressspaltes in Richtung einer Gegenwalze oder eines Bandes.

Der Spalt zwischen den Stützelementen 1 und dem Walzenmantel 2 wird mit einem Schmiermittel in Form von Öl hydrostatisch und/oder hydrodynamisch geschmiert. Dabei bildet sich an der Innenseite des Walzenmantels 2 ein Schmiermittelfilm.

Wegen der Rotation des Walzenmantels 2 kommt es zur Flüssigkeitsreibung und einer Erwärmung der Schmierfluids mit den beschriebenen Nachteilen.

Wie in den Figuren zu erkennen, werden die Stützelemente 1 hier von zylindrischen Stützkolben gebildet, die über einen, mit Druckmittel in Form von Öl versorgten Druckraum 7 zum Walzenmantel 2 gepresst werden.

Dabei erfolgt die Schmierung des Spaltes zwischen der Lauffläche des Stützkolbens und dem Walzenmantel 2 über hydrostatische, zum Walzenmantel 2 hin offene Taschen 8 in der Lauffläche.

Diese Taschen 8 werden über eine Verbindung 9 zum Druckraum 7 mit dem hier gleichzeitig auch als Schmiermittel verwendeten Druckmittel versorgt.

Zur Kühlung des Schmiermittels im Spalt zwischen der Lauffläche des Stützelementes 1 und dem Walzenmantel 2 sowie im Walzeninnern werden die Stützelemente 1 gekühlt.

Diese Kühlung erfolgt über eine ringförmige Kühlkammer 4 im Stützelement 1 nahe dem Spalt zum Walzenmantel 2, wobei die Kühlkammer 4 die hydrostatischen Tasche 8 umschließt und die Achse der Kühlkammer 4 radial, d.h. in Bewegungsrichtung des Stützkolbens verläuft.

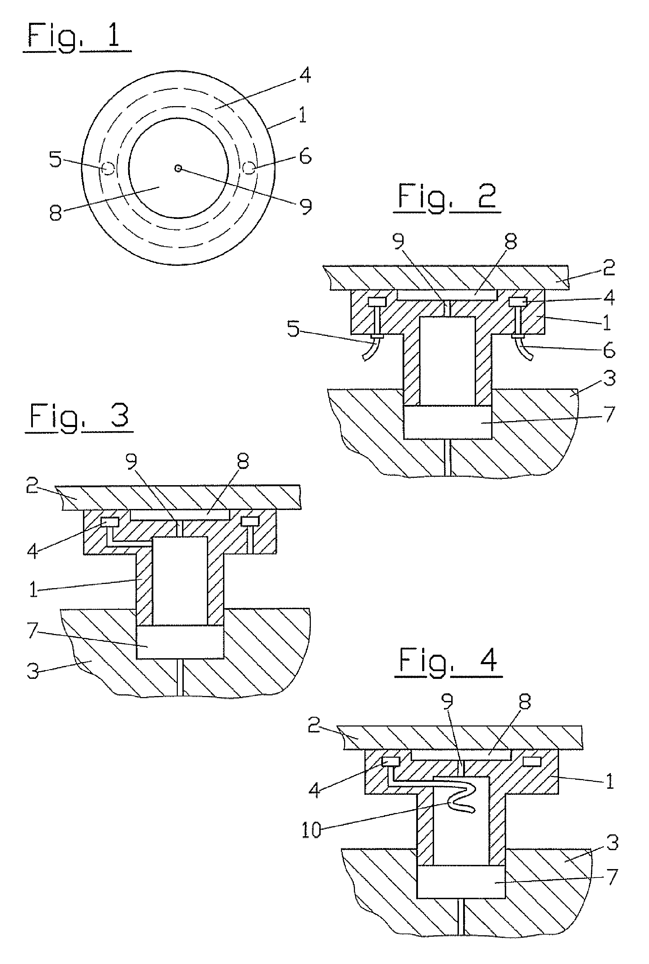

Bei den in den Figuren 2 und 3 dargestellten Ausführungsbeispielen wird die Kühlkammer 4 von einem Kühlmittel durchströmt.

Da das Stützelement 1 aus Metall besteht und damit thermisch gut leitend ist, kann das Kühlmittel relativ effizient Wärmeenergie vom Schmiermittel aufnehmen und diese somit kühlen.

In Figur 2 ist der Kühlkreislauf separat ausgeführt, weshalb das Kühlmittel über eine eigene Kühlmittel-Zuleitung 5 von außen zugeführt und über eine Kühlmittel-Ableitung 6 wieder aus der Presswalze geführt wird.

Bei der Ausführung gemäß Figur 3 sind Druck-, Schmiermittel und Kühlmittel identisch. Daher kann das Kühlmittel direkt aus dem Druckraum 7 in die Kühlkammer 4 geführt werden.

Die Abführung des Kühlmittels kann zur Vereinfachung, wie zu sehen, direkt in das Innere der Presswalze oder aber über eine Kühlmittel-Ableitung 6 erfolgen.

Bei dem in Figur 4 dargestellten Wärmeübertrager ist die Kühlkammer 4 mit einem Kühlmittel gefüllt, welches eine Verdampfungstemperatur besitzt, die über der Raumtemperatur des Druckraumes 7, aber unter der Betriebstemperatur (meist zwischen 20 und 80°C) des Stützelementes 1 liegt.

Kommt es während des Betriebs nun zur Erwärmung des Schmiermittels und damit auch des Stützelementes 1 so nimmt das Kühlmittel Wärmeenergie auf und verdampft. Dieses verdampfte Kühlmittel wird dann in einem Zusatz-Wärmeübertrager gekühlt und wieder verflüssigt.

Der Zusatz-Wärmeübertrager wird von einem Kanal 10 gebildet, der sich im kühleren Druckmittel des Druckraumes 7 befindet. Der thermisch leitende Kanal 10 erlaubt den Wärmetransport vom Kühlmittel zum Druckmittel.

### Bezugszeichenliste

- 1: Stützelement
- 2: Walzenmantel
- 3: Träger
- 4: Kühlkammer
- 5: Kühlmittel-Zuleitung
- 6: Kühlmittel-Ableitung
- 7: Druckraum
- 8: Taschen
- 9: Verbindung
- 10: Kanal

## Patentansprüche

1. Presswalze zur Behandlung einer Papier-, Karton-, Tissue- oder einer anderen Faserstoffbahn in einer Maschine zur Herstellung und/oder Veredlung derselben mit einem, um einen feststehenden Träger (3) rotierenden, zylindrischen Walzenmantel (2), welcher sich über zumindest ein Stützelement (1) auf dem Träger (3) abstützt, wobei der Spalt zwischen dem Stützelement (1) und dem Walzenmantel (2) mit einem flüssigen Schmiermittel geschmiert wird, **dadurch gekennzeichnet, dass**
sich in dem Stützelement (1) zumindest ein Wärmeübertrager zur Kühlung wenigstens eines Bereiches des Stützelementes (1) befindet.

2. Presswalze nach Anspruch 1, **dadurch gekennzeichnet, dass**
der Wärmeübertrager zumindest eine Kühlkammer (4) umfasst, die sich im Stützelement (1) befindet und mit einem Kühlmittel gefüllt ist.

3. Presswalze nach Anspruch 2, **dadurch gekennzeichnet, dass**
die Kühlkammer (4) über thermisch gut leitendes Material mit dem Schmiermittel in Verbindung steht.

4. Presswalze nach einem der vorhergehenden Ansprüche, **dadurch gekennzeichnet, dass**
das Stützelement (1) aus einem thermisch gut leitenden Material, insbesondere Metall besteht.

5. Presswalze nach einem der Ansprüche 2 bis 4, **dadurch gekennzeichnet, dass**
die Kühlkammer (4) möglichst nahe am Spalt zwischen dem Stützelement (1) und dem Walzenmantel (2) angeordnet ist.

6. Presswalze nach einem der Ansprüche 2 bis 5, **dadurch gekennzeichnet, dass**
das Kühlmittel gasförmig ist.

7. Presswalze nach einem der Ansprüche 2 bis 5, **dadurch gekennzeichnet, dass**
das Kühlmittel flüssig ist.

8. Presswalze nach Anspruch 7, **dadurch gekennzeichnet, dass**
das Kühlmittel über eine separate Kühlmittel-Zuleitung (5) zur Kühlkammer (4) geführt wird.

9. Presswalze nach Anspruch 7, **dadurch gekennzeichnet, dass**
das Kühlmittel von einem Schmier- und/oder Druckmittel des Stützelementes (1) gebildet wird.

10. Presswalze nach einem der Ansprüche 7 bis 9, **dadurch gekennzeichnet, dass**
das Kühlmittel von der Kühlkammer (4) in das Walzeninnere abgeführt wird.

11. Presswalze nach einem der vorhergehenden Ansprüche, **dadurch gekennzeichnet, dass**
das Kühlmittel dem Schmier- und/oder Druckmittel des Stützelementes (1) gleicht.

12. Presswalze nach einem der Ansprüche 7 bis 9 oder 11, **dadurch gekennzeichnet, dass**
das Kühlmittel über eine separate Kühlmittel-Ableitung (6) von der Kühlkammer (4) aus der Presswalze geführt wird.

13. Presswalze nach Anspruch 8 und 12, **dadurch gekennzeichnet, dass**
das Kühlmittel dem Schmier- und/oder Druckmittel des Stützelementes (1) nicht gleicht und vorzugsweise von Wasser gebildet wird.

14. Presswalze nach einem der Ansprüche 2 bis 7, **dadurch gekennzeichnet, dass**
die Kühlkammer (4) mit einem weiteren Zusatz-Wärmeübertrager zur Kühlung des Kühlmittels verbunden ist.

15. Presswalze nach Anspruch 14, **dadurch gekennzeichnet, dass**
das Kühlmittel des Zusatz-Wärmeübertragers von dem Schmier- und/oder Druckmittel des Stützelementes (1) gebildet wird.

16. Presswalze nach Anspruch 14, **dadurch gekennzeichnet, dass**
der Zusatz-Wärmeübertrager mit eigenem Kühlmittel versorgt wird.

17. Presswalze nach einem der Ansprüche 14 bis 16, **dadurch gekennzeichnet, dass**
die Verdampfungstemperatur des Kühlmittels über der Raumtemperatur, aber unter der Betriebstemperatur des Stützelementes (1) liegt.
